# FASCICULE DE BREVET EUROPEEN

(11) **EP 0 683 003 B1**
(45) Date de publication et mention de la délivrance du brevet: **31.03.1999**
(21) Numéro de dépôt: 95106523.4
(22) Date de dépôt: 29.04.1995
(51) Int. Cl.: B23D 35/00, B26D 7/26, B26D 7/18

(54) **Dispositif de centrage et de verrouillage d'un cadre porte-outils dans une presse de découpage**
Vorrichtung zum Positionieren und Fixieren eines Werkzeugträgers in einer Schneidvorrichtung
Positioning and blocking device for tool carrier in a cutting apparatus

(30) Priorité: 04.05.1994 CH 1395/94
(43) Date de publication de la demande: 22.11.1995
(73) Titulaire: BOBST S.A., 1001 Lausanne (CH)
(72) Inventeur: Rebeaud, Jean-Claude, CH-1052 Le Mont (CH)
(74) Mandataire: Colomb, Claude

(56) Documents cités:
- FR-A- 2 354 882
- US-A- 4 627 321
- US-A- 5 072 507

## Description

La présente invention a pour objet un dispositif de centrage et de verrouillage d'un cadre porte-outils dans une presse de découpage, notamment dans une presse de découpage destinée au travail du papier ou du carton, selon le preambule de la revendication 1 et comme connû du document US-A-3.786.731.

Les presses de découpage connues à ce jour, pour le travail du papier ou du carton en vue de réaliser des découpes de boîtes pliantes, sont généralement composées de plusieurs stations de travail disposées l'une à la suite de l'autre, ces stations de travail étant communément désignées, dans l'ordre de leur disposition dans la presse, par station de marge ou d'introduction, station de découpage, station d'éjection et finalement, station de réception.

Dans ce genre de machines, le papier ou le carton se présente généralement sous la forme de feuilles sensiblement rectangulaires. Ces feuilles sont prises du dessus d'une pile placée dans la station de marge pour être amenées jusqu'à des organes de transport destinés à les conduire au travers des stations de découpage, d'éjection et de réception.

Dans l'une de ces presses de découpage, la station de découpage comprend en général un sommier supérieur ou traverse supérieure fixée entre deux bâtis latéraux et un sommier inférieur ou platine inférieure mobile verticalement. L'outil de découpage, se présentant sous la forme d'une plaque munie de filets coupeurs et refouleurs, est fixé contre la partie inférieure du sommier supérieur de telle sorte que, lors du mouvement vertical de bas en haut du sommier mobile inférieur, le découpage de la feuille de papier ou de carton soit réalisé. Il va de soit que l'on peut découper, en une seule fois, un grand nombre de découpes de boîtes réparties sur la surface d'une feuille. De par la configuration des découpes de boîtes, il subsiste toujours entre-elles de petits déchets qu'il est nécessaire d'enlever pour obtenir, à la station de réception, un produit semi-fini se présentant sous la forme d'une feuille composée d'une pluralité de découpes de boîtes reliées entre elles par de petits points d'attache qu'il faudra ensuite briser pour séparer chaque découpe l'une de l'autre.

Les petits déchets dont nous venons de parler sont enlevés de la feuille dans la station d'éjection qui comprend normalement un outil supérieur et un outil inférieur entre lesquels est montée une planche ajourée dont les ouvertures sont disposées exactement en face des déchets à éjecter. Ces ouvertures ont de plus la même forme géométrique que la forme des déchets. Les outils supérieur, inférieur et la planche ajourée sont animés d'un mouvement vertical de bas en haut et de haut en bas synchronisé avec l'avance des feuilles dans la machine. L'outil supérieur d'éjection est composé d'un cadre rectangulaire sur lequel sont montés les organes d'éjection se présentant généralement sous la forme d'aiguilles d'éjection télescopiques. Ces aiguilles d'éjection peuvent être fixées, de façon réglable, sur des traverses reliant les barres latérales ou longitudinales du cadre rectangulaire de telle sorte que l'on puisse les positionner aux endroits des déchets à éjecter et cela en regard des aiguilles télescopiques montées sur l'outil d'éjection inférieur. Dans une autre version, l'outil supérieur d'éjection peut se présenter sous la forme d'une planche de bois dans laquelle on a planté, aux endroits choisis, des aiguilles non télescopiques alors que l'outil inférieur d'éjection comporte quant à lui des aiguilles télescopiques placées en regard des aiguilles de l'outil supérieur d'éjection.

Ainsi que cela ressort de ce que nous venons de décrire, les déchets sont pincés entre les aiguilles des outils supérieur et inférieur et poussés vers le bas au travers des ouvertures aménagées dans la planche ajourée lors du mouvement vertical des organes d'éjection. Une telle station d'éjection est décrite plus en détail dans le brevet US 3,786,731.

La presse à découper pouvant bien entendu réaliser des travaux différents correspondant à plusieurs genres et formats de découpes, il conviendra de régler la position des outils d'éjection en fonction de chaque travail et bien entendu de changer la planche ajourée pour en adapter une qui corresponde au travail à réaliser. En règle générale, chacun des différents outils, soit de découpage ou d'éjection, sont centrés suivant l'axe médian de la machine et par rapport à une référence située, sur cet axe médian, à la partie avant de chaque outil de telle façon à ce que leur repérage relationnel soit assuré avec un maximum de précision et garantisse la répétitivité du positionnement lors de leur extraction ou de leur montage dans leurs stations respectives. Pour faciliter ces réglages on a prévu de pouvoir retirer les outils supérieur inférieur ainsi que la planche ajourée de la machine. Cette opération s'effectue en extrayant latéralement ces divers éléments de la station d'éjection, comme on le ferait avec un tiroir. Pour ce faire, les outils supérieur, inférieur et la planche ajourée sont chacuns insérés dans des coulisses aménagées dans leurs berceaux respectifs puis centrés et verrouillés dans leur position de travail. Il est très important que le centrage de ces outils soit réalisé avec une grande précision pour garantir l'exactitude de la position relative entre les aiguilles supérieures et inférieures ainsi qu'avec les ouvertures de la planche ajourée. Dans les stations d'éjections connues à ce jour, la planche ajourée et les outils supérieur et inférieur sont centrés au moyen d'un premier pigeonneau solidaire de l'une des barres longitudinales du cadre porte-outils et d'un deuxième pigeonneau solidaire de l'autre barre longitudinale de ce cadre. Le verrouillage du cadre porte-outil est de plus combiné avec le deuxième pigeonneau de centrage. Un réglage de la position latérale et de la position longitudinale de l'outil est en outre possible en agissant sur les pigeonneaux de centrage. En résumé, le centrage de l'outil est réalisé en deux points localisés sensiblement à la moitié de la longueur des barres longitudinales du cadre porte-outils. Le verrouillage du cadre porte-outils s'effectue au moyen d'un crochet, solidaire du berceau, que l'on assure, par serrage à l'aide d'une vis six pans, sur l'extrémité du deuxième pigeonneau de centrage.

L'utilisation de ce dispositif de centrage et de verrouillage présente plusieurs inconvénients. Premièrement, avec seulement deux points de centrage situés de chaque côté du cadre porte-outils, il se produit lors du verrouillage une déformation du cadre qui est préjudiciable à la précision de positionnement relative entre les outils d'éjection supérieurs et inférieurs et la planche ajourée, ce qui dans le cas de l'éjection de très petits déchets n'est pas admissible. Une déformation du cadre porte-outils peut également être provoquée par le montage des barres de support des aiguilles d'éjection et dans ce cas, le fait de n'utiliser que deux points de centrage ne permettra pas de compenser cette déformation. Il est de plus évident que la rigidité du cadre, une fois centré et verrouillé, ne sera pas très bonne en raison de son maintien par deux points seulement. De plus le défaut d'alignement entre les aiguilles supérieures et inférieures provoque le basculement des déchets à éjecter et par là des bourrages nécessitant l'arrêt de la machine. Cette déformation influence aussi le repérage entre les outils montés dans les autres stations de la machine. Il faut ensuite relever le fait que l'opération de verrouillage nécessite l'emploi d'un outil pour bloquer la vis six pans servant au blocage du cadre porte-outils.

Dans le domaine du cartonnage, les utilisateurs de presses à découper sont de plus en plus confrontés avec des travaux variés nécessitant plusieurs changements d'outils et leur principal souci réside dans la diminution drastique des temps attribués à ces opérations de façon à augmenter autant que possible les temps de production effectifs de leurs machines. Les défauts relatifs à la précision de positionnement des différents outils de la presse à découper étant également une source de mauvais fonctionnement entraînant des bourrages, ils doivent aussi être supprimés pour augmenter la production effective de la machine.

La présente invention a pour but de pallier les inconvénients précités en procurant à l'utilisateur un dispositif de centrage et de verrouillage des cadres porte-outils qui soit précis, sûr et de montage et démontage rapide.

A cet effet, le dispositif selon l'invention est conforme à ce qu'énonce la revendication 1.

L'invention sera mieux comprise à l'étude de la description d'une forme d'exécution d'un dispositif de centrage et de verrouillage donnée à titre d'exemple en faisant référence aux dessins annexés dans lesquels :
- La figure 1 est une vue générale schématique en perspective d'une station d'éjection,
- La figure 2 est une vue de face d'une station d'éjection,
- La figure 3 est une vue schématique en perspective d'un cadre porte-outils supérieur,
- La figure 4 est une vue schématique en plan du cadre porte-planche ajourée,
- La figure 5 est une vue de profil, en coupe partielle, d'un premier organe de verrouillage d'un cadre porte-outils supérieur,
- La figure 6 est une vue de profil, en coupe partielle, d'un deuxième organe de verrouillage d'un cadre porte-outils supérieur,
- La figure 7 est une vue selon A de la figure 5,
- La figure 8 est une vue selon B de la figure 5,
- La figure 9 est une vue selon C de la figure 6,
- La figure 10 est une vue selon D de la figure 6,
- La figure 11 est une vue de profil d'un organe de verrouillage d'un cadre porte-planche ajourée et,
- La figure 12 est une vue en coupe selon XII-XII
   de la figure 11.

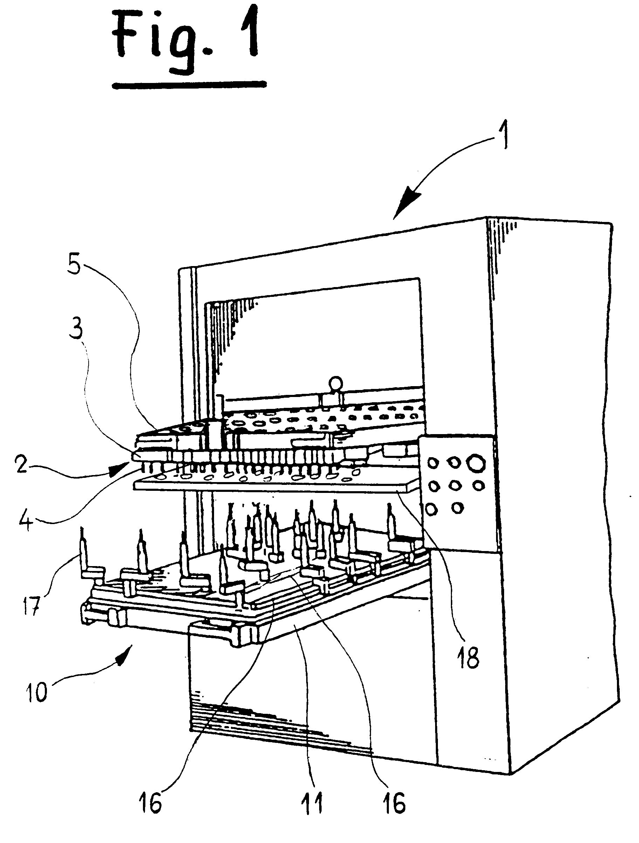

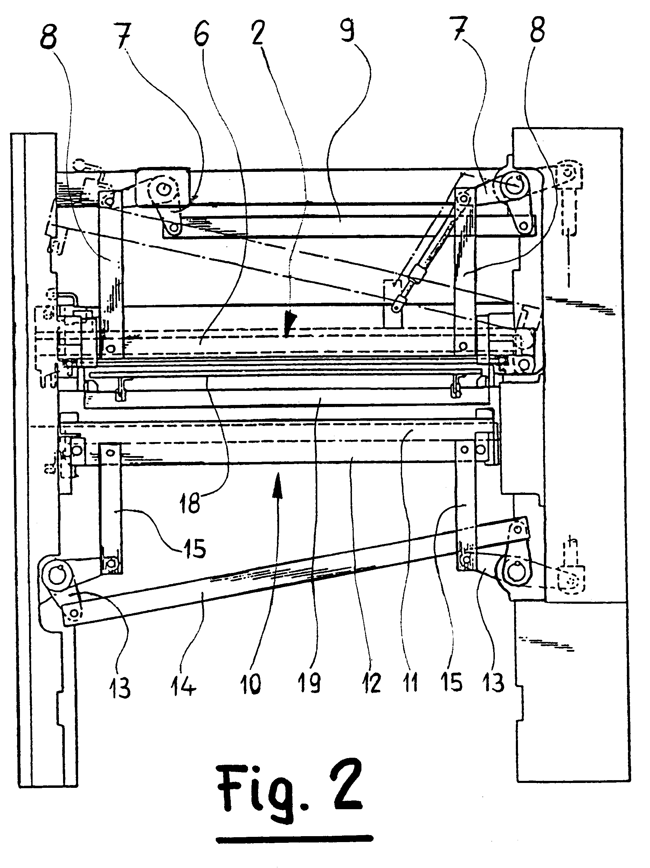

La figure 1 est une vue générale schématique en perspective d'une station d'éjection 1 d'une presse a découper. Cette station d'éjection comprend un outil supérieur 2 se présentant, dans l'exemple choisi, sous la forme d'une planche de bois 3 munie d'aiguilles d'éjection 4. L'outil supérieur 2 est maintenu dans un cadre-support supérieur 5 pouvant coulisser à la manière d'un tiroir dans des glissières, non représentées, fixées sur un berceau supérieur 6, mobile verticalement sous l'effet d'un dispositif à leviers 7 et tirettes 8 et 9 (voir figure 2).

La station d'éjection 1 comprend aussi un outil inférieur 10 maintenu dans un cadre-support inférieur 11 pouvant lui aussi coulisser à la manière d'un tiroir dans des glissières, non représentées, fixées sur un berceau inférieur 12, mobile verticalement sous l'action d'un dispositif à leviers 13 et tirettes 14 et 15 (voir aussi figure 2). En règle générale, l'outil inférieur comporte plusieurs barres 16, dont seules quelques une ont été représentées de façon à ne pas nuire à la clarté de la figure. Une série d'aiguilles d'éjection télescopiques 17 est montée sur ces barres 16 en regard avec les aiguilles d'éjection 4 de l'outil supérieur 2. Enfin, la station d'éjection 1 comporte un troisième élément sous la forme d'une plaque perforée 18 montée sur un cadre 19 pouvant lui-aussi être extrait de la station d'éjection 1 à la manière d'un tiroir. Les perforations de la plaque 18 sont réalisées de façon à tenir compte de la forme des déchets à éjecter et les aiguilles d'éjection 4 et 17, disposées en regard les unes des autres, pincent les déchets et les poussent au travers des perforations de la plaque 18 lorsque la feuille de carton à travailler est à l'arrêt dans la station d'éjection.

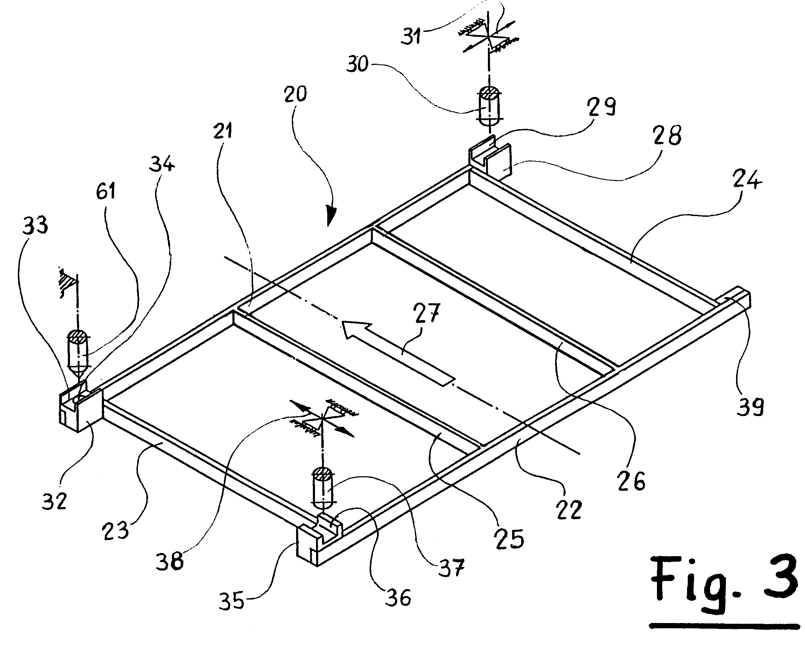

La figure 3 est une vue schématique en perspective d'un cadre porte-outils supérieur 20 comprenant une barre avant 21 et une barre arrière 22 reliées par deux traverses 23 et 24 de façon à former un cadre rigide. De plus, les barres avant et arrière 21 et 22 sont entretoisées par deux autres traverses 25 et 26. Dans l'exemple choisi, la feuille à travailler arrive dans la station d'éjection dans le sens indiqué par la flèche 27 et le cadre porte-outils supérieur 20 sera retiré de cette station, par exemple lors d'un changement d'outils, perpendiculairement au sens de la flèche 27. Cette figure représente aussi, de manière schématique, le centrage et le verrouillage du cadre porte-outils 20. La partie avant de ce cadre 20, au niveau de la barre avant 21, est équipée d'un plot de guidage 28 comportant une rainure 29 dans laquelle s'engage un organe de guidage 30 autorisant le déplacement du cadre dans le sens indiqué par la double flèche 31. Toujours sur la partie avant du cadre 20, à l'opposé du plot de guidage 28, se trouve un plot de verrouillage 32 comportant une rainure 33 et un alésage 34 dans lequel le pigeonneau de centrage et de verrouillage 61 vient s'engager. La partie arrière du cadre 20, au niveau de la barre arrière 22, est équipée d'un autre plot de guidage 35 possédant une rainure 36 dans laquelle s'engage un organe de guidage 37 autorisant le déplacement du cadre 20 dans la direction indiquée par la double flèche 38. A l'opposé de ce plot de guidage 35, la partie arrière du cadre 20 possède un organe d'appui 39 qui est simplement constitué par le guidage du cadre dans la coulisse 85. Cette disposition des guidages, du centrage et du verrouillage du cadre 20 procure une excellente rigidité du cadre 20 lorsque celui-ci est verrouillé en machine.

Il est à remarquer que la construction du cadre porte-outils inférieur est faite suivant le même principe, à la seule différence que les plots de guidage 28 et 35 ainsi que le plot de centrage et de verrouillage 32 seront inversés de façon à se que les rainures 29, 33 et 36 soient tournées vers le bas du cadre porte-outils.

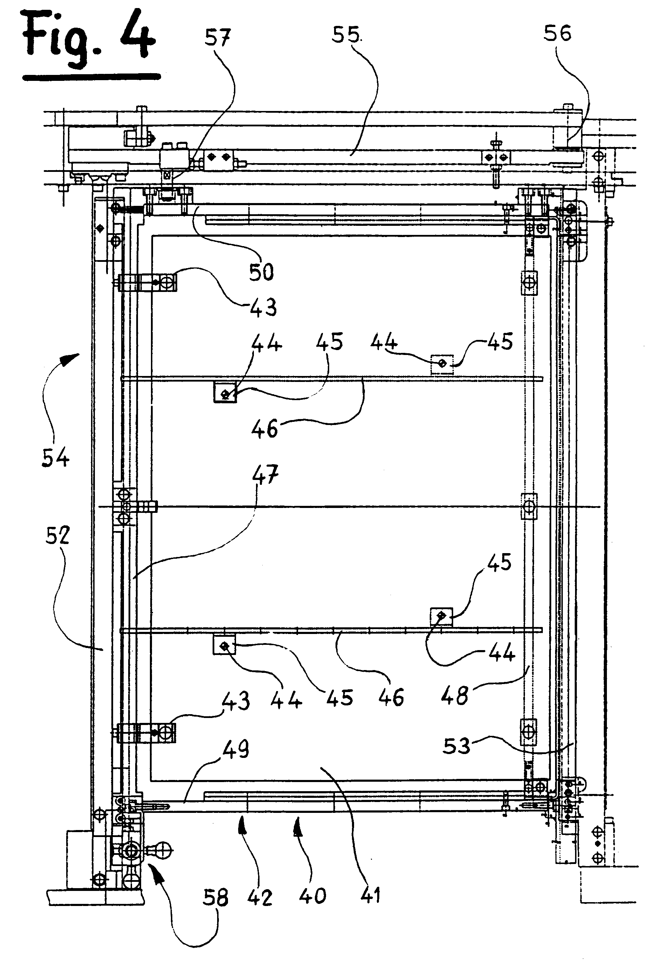

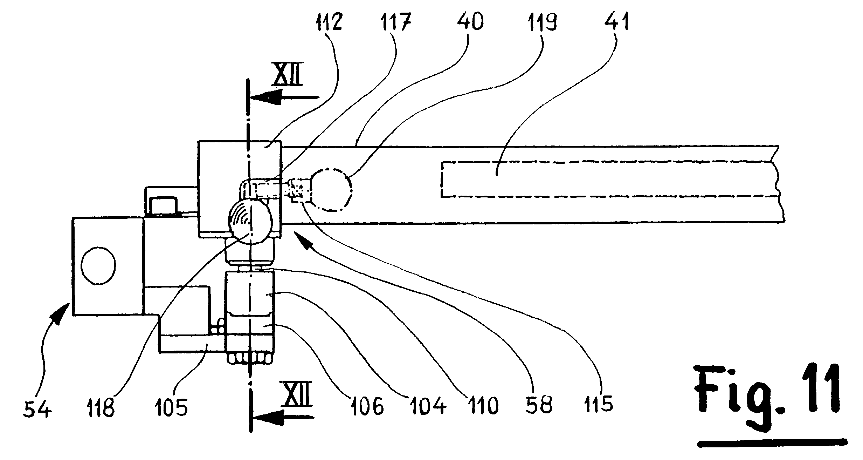

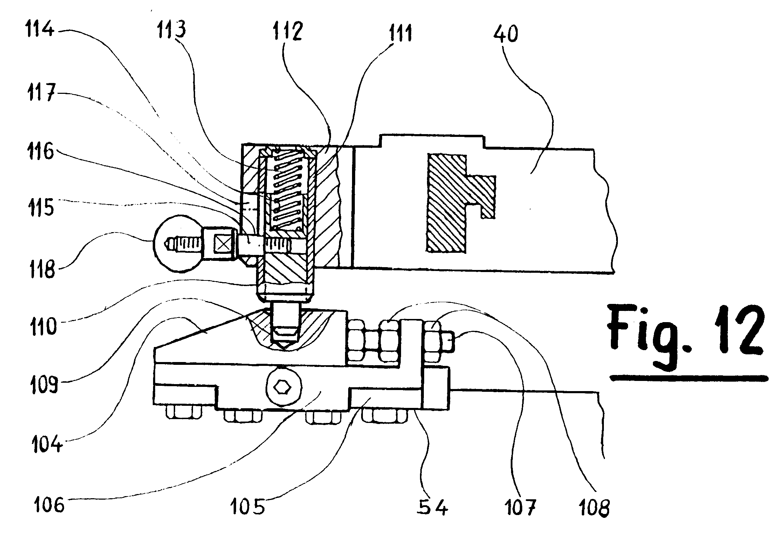

La figure 4 est une vue schématique en plan du cadre porte-planche d'éjection 40. La planche d'éjection est constituée par une plaque perforée 41, représentée ici sans perforations correspondant aux emplacements des déchets à éjecter. Cette plaque perforée 41 est fixée sur un cadre 42 au moyen de pattes de fixation 43 et de vis 44 vissées dans des équerres 45 fixées sur des barres de support réglables 46 prenant appui sur la barre transversale avant 47 du cadre 40 et sur une traverse 48, elle aussi réglable, reliant les deux barres longitudinales 49 et 50 qui relient la barre transversale avant 47 à la barre transversale arrière 51 du cadre 40. Les barres transversales avant 47 et arrière 51 s'engagent dans des coulisses 52 et 53 solidaires d'un berceau mobile 54 actionné par un levier pivotant 55. Ce levier 55 pivote autour d'un point de rotation 56 situé au voisinage de la barre transversale arrière 51 sous l'effet d'un moyen de commande qui n'est pas représenté ici. Le berceau mobile 54 est relié au levier pivotant 55 par un organe de centrage réglable 57 et par un dispositif de centrage et de verrouillage 58 qui sera décrit plus en détail en relation avec les figures 11 et 12.

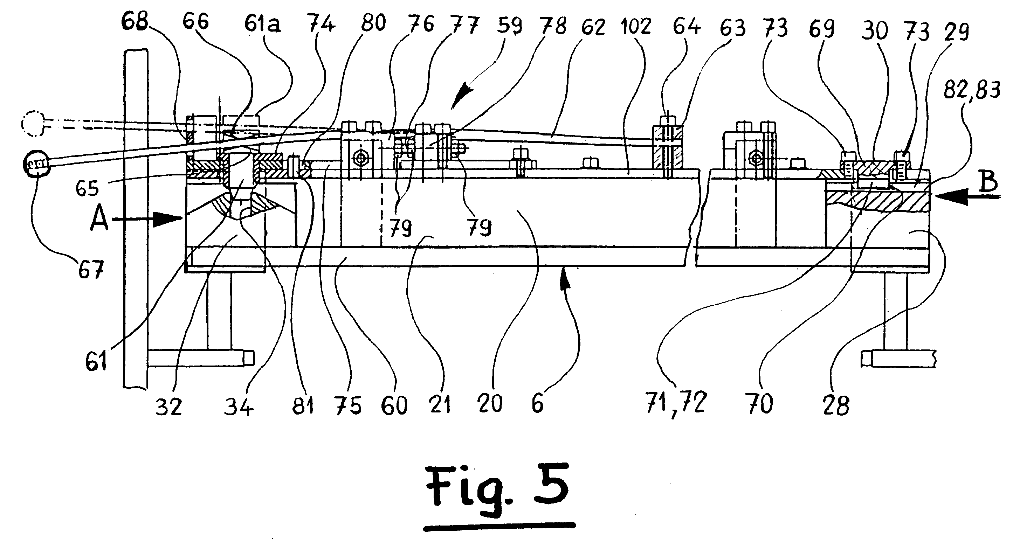

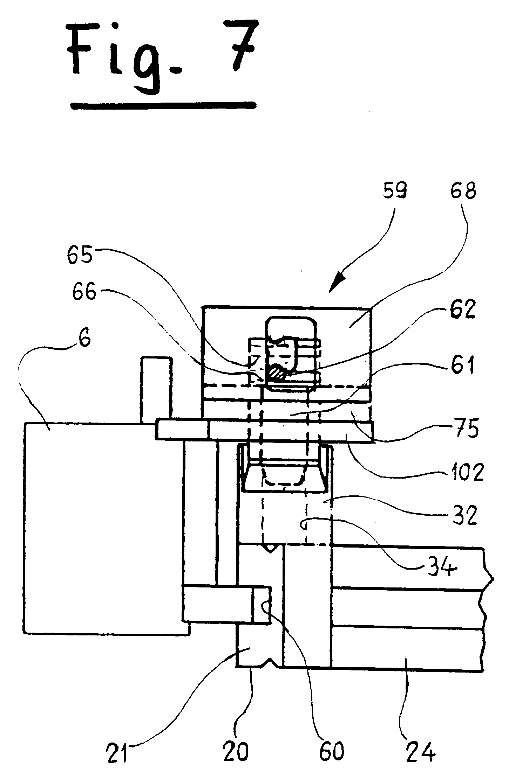

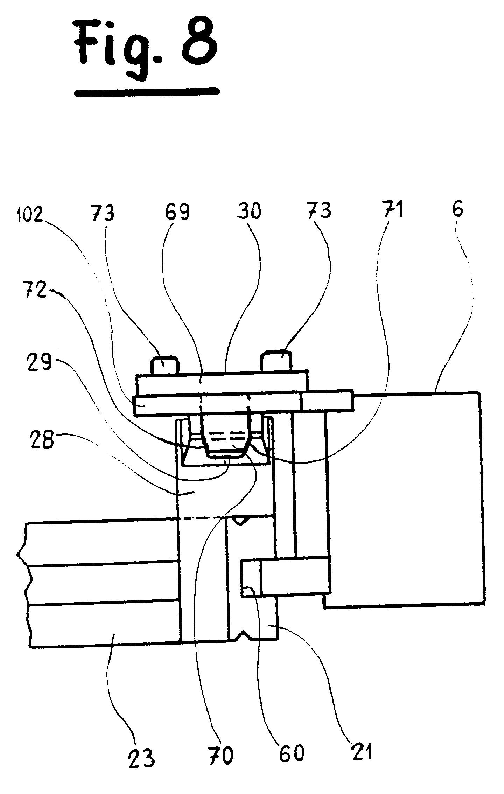

La figure 5 est une vue de profil, en coupe partielle, d'un premier organe de verrouillage et de centrage 59 d'un cadre porte-outils supérieur 20. Cette figure représente la partie avant du cadre porte-outils 20 et en particulier la barre avant 21 lorsque celle-ci est engagée dans la coulisse 60 du berceau supérieur 6. Le premier organe de verrouillage et de centrage 59 comporte une tige flexible 62, fixée à l'une de ses extrémités, dans un plot fendu 63 à l'aide de deux vis 64. Le plot fendu 63 est solidaire de la coulisse 60 du berceau supérieur 6. Cette tige flexible 62 passe au travers de la partie supérieure du pigeonneau de centrage et de verrouillage 61 qui présente une fraisure comportant deux plans inclinés 65 et 66 en opposition, les plans inclinés étant en forme de toit. Le pigeonneau de centrage et de verrouillage 61 est monté dans une douille 74 fixée sur un lardon de réglage 75 muni à l'une de ses extrémités d'un plot de réglage 76 recevant une tige filetée 77 traversant un plot d'ancrage 78 fixé au berceau supérieur 6. Les écrous 79 montés sur la tige filetée 77 permettront de ce fait d'ajuster la position désirée du pigeonneau de centrage et de verrouillage 61 en faisant se déplacer le lardon de réglage 75, celui-ci étant guidé dans une fente allongée 80 dans laquelle s'engage une goupille cylindrique 81. L'autre extrémité de la tige flexible est équipée d'une poignée 67. De façon à pouvoir être maintenue dans une position de verrouillage et dans une position de déverrouillage, la tige flexible 62 s'engage dans une équerre à baïonnette 68 dont la forme sera visible sur la figure 7 qui sera décrite plus avant, l'équerre à baïonnette 68 étant fixée au lardon de réglage 75. Dans la position représentée sur la figure 5, le cadre porte-outils supérieur 20 est en position centrée et verrouillée, c'est à dire que la partie conique du pigeonneau de centrage et de verrouillage 61 est engagée dans l'alésage 34, empêchant de ce fait toute extraction latérale de ce cadre porte-outils 20. Celui-ci est en outre maintenu, à la partie opposée au plot de verrouillage 32, par l'organe de guidage 30 qui s'engage dans la rainure 29 du plot de guidage 28. L'organe de guidage 30 est constitué par un plot de guidage 69 possédant un nez 70 présentant deux plans inclinés 71 et 72 (voir figure 8) qui agiront conjointement avec les flancs inclinés 82 et 83 de la rainure 29 du plot de guidage 28 (voir également la figure 8) pour assurer un guidage précis du cadre porte-outils 20. Le plot de guidage 69 est fixé sur la coulisse 60 du berceau supérieur 6 à l'aide de deux vis 73. Pour déverrouiller le cadre porte-outils 20, il suffira de déplacer la tige flexible 62 dans la baïonnette de l'équerre à baïonnette 68, jusqu'à ce que le pigeonneau de centrage et de verrouillage 61 vienne occuper la position 61a représentée en traits mixtes, de façon à ce que le pigeonneau de centrage et de verrouillage soit dégagé de son alésage 34 et autorise l'extraction latérale du cadre porte-outils 20.

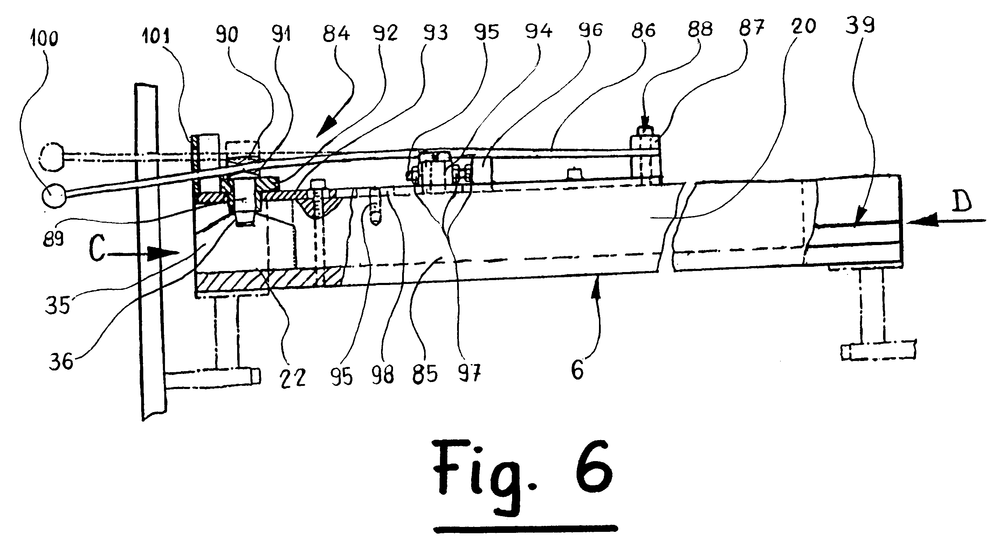

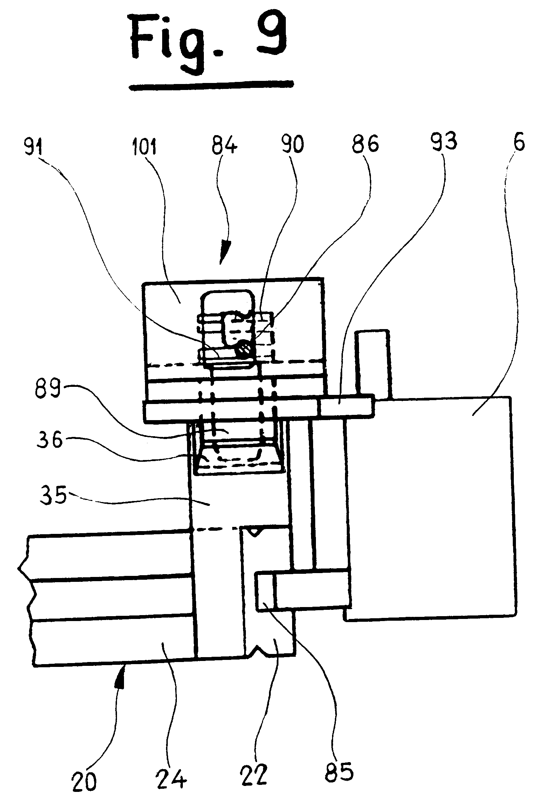

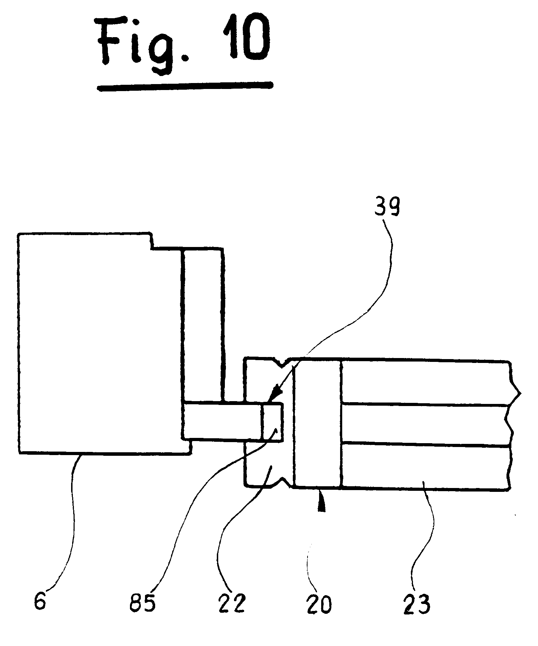

La figure 6 est une vue de profil, en coupe partielle, d'un deuxième organe de verrouillage et de centrage 84 d'un cadre porte-outils supérieur 20. Cette figure représente la partie arrière du cadre porte-outils 20 et en particulier la barre arrière 22 lorsque celle-ci est engagée dans la coulisse 85 du berceau supérieur 6. Le deuxième organe de verrouillage et de centrage 84 comporte une tige flexible 86, fixée à l'une de ses extrémités, dans un plot fendu 87 à l'aide de deux vis 88. Le plot fendu 87 est solidaire de la coulisse 85 du berceau supérieur 6. Cette tige flexible 86 passe au travers de la partie supérieure du pigeonneau de centrage et de verrouillage 89 qui présente une fraisure comportant deux plans inclinés 90 et 91 en opposition, les plans inclinés étant en forme de toit. Le pigeonneau de centrage et de verrouillage 89 est monté dans une douille 92 fixée sur un lardon de réglage 93 muni à l'une de ses extrémités d'un plot de réglage 94 recevant une tige filetée 95 traversant un plot d'ancrage 96 fixé au berceau supérieur 6. Les écrous 97 montés sur la tige filetée 95 permettront de ce fait d'ajuster la position désirée du pigeonneau de centrage et de verrouillage 89 en faisant se déplacer le lardon de réglage 93, celui-ci étant guidé dans une fente allongée 98 dans laquelle s'engage une goupille cylindrique 99. L'autre extrémité de la tige flexible 86 est équipée d'une poignée 100. De façon à pouvoir être maintenue dans une position de verrouillage et dans une position de déverrouillage, la tige flexible 86 s'engage dans une équerre à baïonnette 101 dont la forme sera visible sur la figure 9 qui sera décrite plus avant, l'équerre à baïonnette 101 étant fixée au lardon de réglage 93. Dans la position représentée sur la figure 6, le cadre porte-outils supérieur 20 est en position centrée et verrouillée, c'est-à-dire que la partie conique du pigeonneau de centrage et de verrouillage 89 est engagée dans la rainure 36, empêchant de ce fait toute extraction latérale de ce cadre porte-outils 20. Celui-ci est en outre maintenu, à la partie opposée au plot de verrouillage 35, par l'organe d'appui 39 qui agit contre les faces intérieure de la coulisse 85 (voir figure 10). Pour déverrouiller le cadre porte-outils 20, il suffira de déplacer la tige flexible 86 dans la baïonnette de l'équerre à baïonnette 101, jusqu'à ce que le pigeonneau de centrage et de verrouillage 89 vienne occuper la position 89a représentée en traits mixtes, de façon à ce que le pigeonneau de centrage et de verrouillage soit dégagé de la rainure 36 et autorise l'extraction latérale du cadre porte-outils 20.

Il suffira pour extraire latéralement le cadre porte-outils 20 de la machine de déplacer simultanément, ou même l'une après l'autre, les deux tiges flexibles 62 et 86 dans les positions 62a et 86a et de le retirer contre soi. Cette façon de faire simple et rapide permet de gagner un temps appréciable lors de l'échange des outils d'éjection.

Ainsi que nous l'avons mentionné plus haut dans la description, le cadre porte-outils inférieur d'éjection sera réalisé de la même manière et utilisera aussi un dispositif de centrage et de verrouillage en trois points. La construction étant semblable, il ne nous paraît pas judicieux de la décrire plus en détail car la description relative au cadre porte-outils supérieur 20 pourra être facilement être transposée à cette réalisation.

La figure 7 est une vue selon A de la figure 5 qui représente la manière dont le cadre porte-outils 20 ainsi que le premier organe de verrouillage et de centrage 59 sont disposés par rapport au berceau supérieur 6. Pour la compréhension de cette figure, on se reportera aux signes de référence utilisés lors de la description de la figure 5.

La figure 8 est une vue selon B de la figure 5 montrant la manière dont le cadre porte-outils 20 ainsi que l'organe de guidage 30 sont disposés par rapport au berceau supérieur 6 et comment l'organe de guidage 30 est relié au berceau supérieur par l'intermédiaire d'une plaque 102. Pour la compréhension de cette figure, on se reportera également aux signes de référence utilisés lors de la description de la figure 5.

La figure 9 est une vue selon C de la figure 6 qui représente la manière dont le cadre porte-outils 20 ainsi que le deuxième organe de verrouillage et de centrage 84 sont disposés par rapport au berceau supérieur 6. Pour la compréhension de cette figure, on se reportera aux signes de référence utilisés lors de la description de la figure 6.

La figure 10 est une vue selon D de la figure 6 montrant la manière dont le cadre porte-outils 20 ainsi que l'organe de guidage 30 sont disposés par rapport au berceau supérieur 6 et comment est réalisé l'appui du cadre porte-outils 20 dans le berceau supérieur 6 par l'intermédiaire de la coulisse 85. Pour la compréhension de cette figure, on se reportera également aux signes de référence utilisés lors de la description de la figure 6.

La figure 11 est une vue de profil d'un dispositif de centrage et de verrouillage 58 d'un cadre porte-planche d'éjection 40 dans lequel est montée une plaque perforée 41 et la figure 12 est une vue en coupe selon XII-XII de la figure 11.

Ainsi que représenté sur ces figures et aussi sur la figure 4 décrite ci-avant, ce cadre porte-planche d'éjection ne comporte qu'un seul dispositif de centrage et de verrouillage 58. Le cadre porte-planche d'éjection 40 est solidaire du berceau mobile 54. Un plot de verrouillage 104 est monté sur une contre partie 106 fixée à une patte d'attache 105 du berceau mobile 54. Dans le but d'ajuster la position de verrouillage du cadre porte-planche d'éjection 40, le plot de verrouillage 104 possède une tige filetée 107 s'engageant dans un perçage de la contre partie 106. La position du plot de verrouillage 104 peut être ajustée en agissant sur les écrous 108 de la tige filetée 107 (voir aussi figure 12). Le plot de verrouillage 104 comporte un alésage 109 dans lequel vient s'engager la partie cylindrique du verrou 110. Le verrou 110 est monté, de façon à pouvoir coulisser, dans une douille 111 chassée dans un support 112 solidaire du cadre porte-planche d'éjection 40. L'alésage qui reçoit la douille 111 est obturé à l'une de ses extrémités contre laquelle s'appuie un ressort 113 guidé également dans un perçage 114 aménagé dans l'extrémité supérieure du verrou 110. Le verrou 110 est en outre muni d'une tige de commande 115 dont la partie cylindrique 116 s'engage dans une baïonnette 117 usinée dans le support 112. La tige de commande 115 est de plus munie d'une poignée 118 au moyen de laquelle on pourra, contre l'action du ressort 113, passer d'une position verrouillée, montrée à la figure 12, à une position déverrouillée 119 représentée en traits mixtes sur la figure 11.

## Revendications

1. Dispositif de centrage et de verrouillage des cadres porte-outils (20) dans une presse de découpage, notamment dans une presse de découpage destinée au travail du papier ou du carton, lesdits cadres porte-outils (20) étant montés à la manière de tiroirs dans leurs berceaux mobiles respectifs (6), caractérisé en ce que le cadre porte-outils (20) comporte deux points de centrage et un point de centrage et de verrouillage, les points de centrage ainsi que le point de centrage et de verrouillage étant équipés d'un premier et d'un deuxième dispositif de centrage et de verrouillage (59, 84), chacun desdits dispositifs de centrage et de verrouillage (59, 84) comprenant une tige (62, 86, 115), munie d'une poignée (67, 100, 118), se déplaçant manuellement dans une équerre à baïonnette (68, 101, 117) d'une position de verrouillage à une position de déverrouillage.

2. Dispositif de centrage et de verrouillage des cadres porte-outils (20) selon la revendication 1, caractérisé en ce que les points de centrage ainsi que le point de centrage et de verrouillage sont équipés d'un premier et d'un deuxième dispositif de centrage et de verrouillage (59, 84) comprenant chacun une tige flexible (62, 86), munie d'une poignée (67, 100), ancrée à l'une de ses extrémités dans un pot d'ancrage (63, 87) solidaire du berceau mobile (6) et se déplaçant manuellement dans une équerre à baïonnette (68, 101) d'une position de verrouillage à une position de déverrouillage, la tige flexible (62, 86) traversant en outre la partie supérieure d'un pigeonneau de centrage et de verrouillage (61, 89) s'engageant dans des rainures (29, 36) pour les points de centrage et dans une rainure (33) et un alésage (34) pour le point de centrage et de verrouillage et en ce que le premier et le deuxième dispositif de centrage et de verrouillage (59, 84) peuvent être actionnés simultanément ou individuellement.

3. Dispositif selon la revendication 2, caractérisé en ce que les rainures (33, 29) du plot de centrage (28) et du plot de centrage et de verrouillage (32) du premier dispositif de centrage et de verrouillage (59) sont disposées dans l'alignement l'une de l'autre à chacune des extrémités de la barre avant (21) du cadre porte-outils (20) et en ce que la rainure (36) du plot de centrage (35) du deuxième dispositif de centrage et de verrouillage (84) est disposée perpendiculairement par rapport aux rainures (29, 33) du premier dispositif de centrage et de verrouillage (59), à l'extrémité de la barre arrière (22) du cadre porte-outils (20) faisant face au plot de verrouillage et de centrage (32) du premier dispositif de centrage et de verrouillage (59).

## Claims

1. Device for centering and locking tool-supporting frames (20) in a die-cutting press, more particularly in a die-cutting press for processing paper or cardboard, said tool-supporting frames (20) being fitted like drawers in respective movable cradles (6), characterized by the fact that the tool-supporting frame (20) has two centering points and one centering and locking point, the centering points and the centering and locking point being equipped with a first and a second centering and locking device (59, 84), each of said centering and locking devices (59, 84) comprising a rod (62, 86, 115) with a handle (67, 100, 118) moved manually in a bayonet angle member (68, 101, 117) from a locking position to an unlocking position.

2. Device for centering and locking tool-supporting frames (20) according to claim 1, characterized by the fact that the centering points and the centering and locking point are equipped with a first and a second centering and locking device (59, 84) each comprising a flexible rod (62, 86) with a handle (67, 100) anchored at one end in an anchoring block (63, 87) secured to the movable cradle (6) and moved manually in a bayonet angle member (68, 101) from a locking position to an unlocking position, the flexible rod (62, 86) also extends through the upper part of a centering and locking pin (61, 89) which fits into slots (29, 36) for the centering points and into a slot (33) and a bore (34) for the centering and locking point, and by the fact that the first and the second centering and locking device (59, 84) being actuated simultaneously or individually.

3. Device according to claim 2, characterized by the fact that the slots (33, 29) of the centering block (28) and of the centering and locking block (32) of the first centering and locking device (59) are disposed in alignment with one another at each end of the front bar (21) of the tool-supporting frame (20), and by the fact that the slot (36) of the centering block (35) of the second centering and locking device (84) is disposed perpendicular to the slots (29, 33) of the first centering and locking device (59), at the end of the rear bar (22) of the tool-supporting frame (20) facing the locking and centering block (32) of the first centering and locking device (59).

## Patentansprüche

1. Zentrier- und Verriegelungsvorrichtung von Werkzeugrahmenhaltern (20) in einer Stanzpresse, und insbesondere in einer Stanzpresse zur Verarbeitung von Papier oder Pappe, wobei diese Werkzeugrahmenhalter (20) wie Schieber in ihren jeweiligen beweglichen Wiegen (6) angebracht sind, dadurch gekennzeichnet, dass der Werkzeugrahmenhalter (20) zwei Zentrierpunkte und einen Zentrier- und Verriegelungspunkt umfasst, wobei die Zentrierpunkte sowie der Zentrier- und Verriegelungspunkt mit einer ersten und einer zweiten Zentrier- und Verriegelungsvorrichtung (59, 84) ausgestattet sind, und jede dieser Zentrier- und Verriegelungsvorrichtungen (59, 84) eine Stange (62, 86, 115) mit einem Griff (67, 100, 118) umfasst, welche sich manuell in einem Bajonettwinkel (68, 101, 117) von einer Verriegelungsstellung in eine Entriegelungsstellung bewegt.

2. Zentrier- und Verriegelungsvorrichtung von Werkzeugrahmenhaltern (20) gemäss Patentanspruch 1, dadurch gekennzeichnet, dass die Zentrierpunkte sowie der Zentrier- und Verriegelungspunkt mit einer ersten und einer zweiten Zentrier- und Verriegelungsvorrichtung (59, 84) ausgestattet sind, wobei jede eine biegsame Stange (62, 86) mit einem Griff (67, 100) umfasst, welche mit einem ihrer Enden in einem Verankerungsblock (63, 87), der mit einer beweglichen Wiege (6) fest verbunden ist, verankert ist, und sich manuell in einem Bajonettwinkel (68, 101) von einer Verriegelungsstellung in eine Entriegelungsstellung bewegt, wobei die biegsame Stange (62, 86) ausserdem den oberen Teil eines Zentrier- und Verriegelungszapfens (61, 89) durchquert, welcher in Rillen (29, 36) für die Zentrierpunkte und in eine Rille (33) und eine Bohrung (34) für den Zentrier- und Verriegelungspunkt eingreift, und dass die erste und die zweite Zentrier- und Verriegelungsvorrichtung (59, 84) gleichzeitig oder einzeln betätigt werden können.

3. Vorrichtung gemäss Patentanspruch 2, dadurch gekennzeichnet, dass die Rillen (33, 29) des Zentrierblocks (28) und des Zentrier- und Verriegelungsblocks (32) der ersten Zentrier- und Verriegelungsvorrichtung (59) in der Flucht zueinander ausgerichtet an jedem Ende der vorderen Stange (21) des Werkzeugrahmenhalters (20) angeordnet sind, und dass die Rille (36) des Zentrierblocks (35) der zweiten Zentrier- und Verriegelungsvorrichtung (84) lotrecht zu den Rillen (29, 33) der ersten Zentrier- und Verriegelungsvorrichtung (59) am Ende der hinteren Stange (22) des Werkzeugrahmenhalters (20) angeordnet ist, und dem Verriegelungs- und Zentrierblock (32) der ersten Zentrier- und Verriegelungsvorrichtung (59) gegenüberliegt.
